# EUROPEAN PATENT APPLICATION

(11) **EP 4 763 518 A2**
(43) Date of publication of application: **24.06.2026**
(21) Application number: 25216338.1
(22) Date of filing: 17.11.2025
(51) Int. Cl.: B33Y 70/00, C22C 1/02, C22C 1/04, C22C 14/00, C22F 1/18

(54) **TITANIUM ALLOY AND METHOD OF MANUFACTURE**

(30) Priority: 17.12.2024 GB 202418464
(71) Applicant: Rolls-Royce plc, London N1 9FX (GB)
(72) Inventor: Martin, Nigel, Derby, DE24 8BJ (GB); Baxter, Gavin, Derby, DE24 8BJ (GB); Lister, Samuel, Derby, DE24 8BJ (GB); Jackson, Martin, Derby, DE24 8BJ (GB)
(74) Representative: Rolls-Royce plc

(57) **Abstract**

A titanium alloy comprising Al 3.00 to 5.50 wt.%; V 3.50 to 5.00 wt.%; Mo 1.50 to 3.00 wt.%; Cr 1.00 to 2.50 wt.%; Fe 0.00 to 0.50 wt.%; Sn 0.00 to 1.25 wt.%; Zr 0.00 to 2.00 wt.%; C 0.01 wt.% to 0.50 wt.%; Si 0.00 wt.% to 0.50 wt.%; N up to 500 ppm; O up to 2500 ppm and H up to 150 ppm; the balance being Ti and incidental elements and unavoidable impurities. Such a titanium alloy is useful for manufacturing gas turbine engine components including compressor disks, bladed disks, or casings.

## Description

### FIELD

The present disclosure relates to a titanium alloy and a method of preparing same. The titanium alloy is useful for manufacturing titanium alloy articles, for example titanium alloy components of gas turbine engines.

### BACKGROUND

Titanium, Ti, is the 22^{nd} element of the Periodic Table of Elements. It is a transition metal with notably high strength and corrosion resistance. It is commonly used as a catalyst in the form of titanium dioxide, titanium trichloride or titanium tetrachloride. However, it is also often alloyed with aluminium, vanadium, molybdenum, chromium or other elements to manufacture strong and lightweight materials for various aerospace, automotive, medical and other industrial applications.

Commercially available titanium alloys include Ti-64, Ti-6242 and Ti-6246, which can typically be produced in ingot form via melt or hot isostatic pressing (HIP) routes and then forged and machined to a desired shape and geometry.

The present disclosure provides a titanium alloy with improved tensile toughness and/or tensile elongation properties, or at least provides a useful alternative to known titanium alloys.

### SUMMARY

The present disclosure provides a titanium alloy, a titanium alloy component, a method of preparing a titanium alloy, and a method of preparing a titanium alloy component, as set out in the appended claims.

According to a first aspect there is provided a titanium alloy comprising the following composition: Al 3.00 to 5.50 wt.%; V 3.50 to 5.00 wt.%; Mo 1.50 to 3.00 wt.%; Cr 1.00 to 2.50 wt.%; Fe 0.00 to 0.50 wt.%; Sn 0.00 to 1.25 wt.%; Zr 0.00 to 2.00 wt.%; C 0.01 wt.% to 0.50 wt.%; Si 0.00 wt.% to 0.50 wt.%; N up to 500 ppm; O up to 2500 ppm and H up to 150 ppm; the balance being Ti and incidental elements and unavoidable impurities.

The titanium alloy of the present disclosure has useful tensile toughness and/or tensile elongation properties which include improvements over existing titanium alloys in the as-produced condition.

In some embodiments, the titanium alloy comprises: Al 4.00 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N up to 500 ppm; O up to 2500 ppm and H up to 150 ppm; the balance being Ti and incidental elements and unavoidable impurities.

In some embodiments, the titanium alloy comprises: Al 4.00 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm and H up to 150 ppm; the balance being Ti and incidental elements and unavoidable impurities.

In some embodiments, the titanium alloy comprises: Al 4.05 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm and H 1 to 150 ppm; the balance being Ti and incidental elements and unavoidable impurities.

In some embodiments, the titanium alloy comprises: Al 4.20 to 4.50 wt.%; V 3.70 to 4.30 wt.%; Mo 1.90 to 2.45 wt.%; Cr 0.70 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm and H 1 to 150 ppm; the balance being Ti and incidental elements and unavoidable impurities.

In some embodiments, the titanium alloy comprises: Al 4.20 to 4.50 wt.%; V 3.70 to 4.25 wt.%; Mo 1.90 to 2.45 wt.%; Cr 0.70 to 1.90 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm and H 1 to 150 ppm; the balance being Ti and incidental elements and unavoidable impurities.

Other alloy elements which may be present in the aforementioned titanium alloy as impurities are, for example, selected from any of the following: S, P, Mg, Cu, Nb, Hf, Bi, Ru, Pd, Y, Co, Ta, Ni, B, Mn, W and/or Zn.

In some embodiments, the titanium alloy comprises no more than 0.2 wt.% of any one of S, P, Mg, Cu, Nb, Hf, Bi, Ru, Pd, Y, Co, Ta, Ni, B, Mn, W and Zn.

In some embodiments, the titanium alloy comprises no more than 0.1 wt.% of any one of S, P, Mg, Cu, Nb, Hf, Bi, Ru, Pd, Y, Co, Ta, Ni, B, Mn, W and Zn.

In some embodiments, the titanium alloy comprises no more than 0.05 wt.% of any one of S, P, Mg, Cu, Nb, Hf, Bi, Ru, Pd, Y, Co, Ta, Ni, B, Mn, W and Zn.

In some embodiments, the sum of all impurities in the titanium alloy is no more than 0.5 wt. %.

In some embodiments, the sum of all impurities in the titanium alloy is no more than 0.4 wt. %.

In some embodiments, the sum of all impurities in the titanium alloy is no more than 0.3 wt. %.

In some embodiments, the sum of all impurities in the titanium alloy is no more than 0.2 wt. %.

In some embodiments, the sum of all impurities in the titanium alloy is no more than 0.1 wt. %.

In some embodiments, the titanium alloy is in a physical form that is suitable for use in a powder-based manufacturing process.

In some embodiments, the titanium alloy is in the form of a powder suitable for use in hot isostatic pressing (HIP) or metal injection moulding (MIM).

In some embodiments, the titanium alloy is in a physical form that is suitable for use in an additive manufacturing process.

In some embodiments, the titanium alloy is in a physical form that is suitable for use in forged or rolled components. Forging methods include but not limited to hot die, hammer and isothermal forging.

The titanium alloy of the present disclosure may also be used in casting and the manufacture of metal matrix composites, including long fibre and particulate reinforced material.

In some embodiments, the titanium alloy is in the form of a wire, a rod or a powder.

According to a second aspect there is provided a titanium alloy article that comprises the titanium alloy of the first aspect.

In some embodiments, the titanium alloy article is a gas turbine component.

In some embodiments, the gas turbine component is a compressor disk, a bladed disk, or a casing.

According to a third aspect there is provided a method of preparing a titanium alloy of the first aspect, the method comprising: combining the elements in the amounts of the first aspect; and casting the combination to form a titanium alloy of the first aspect.

According to a fourth aspect there is provided a method of preparing a titanium alloy article of the second aspect, the method comprising casting the article from a titanium alloy of the first aspect in solid form, forging, or applying energy to a titanium alloy of the first aspect in powder form in an additive manufacturing process.

In some embodiments, the article is forge processed and/or machined to a desired shape and geometry.

The skilled person will appreciate that, except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The term "alloy" as used herein means a mixture of chemical elements of which at least one is a metal. For example brass is an alloy of copper and zinc, sterling silver is an alloy of silver and copper, steel is an alloy of iron and carbon, and silicon steel is an alloy of iron and silicon.

The term "tensile toughness" as used herein means the maximum stress that a material can withstand while being stretched or pulled before breaking. In brittle materials the tensile toughness is close to the yield point, whereas in ductile materials the tensile toughness can be higher. Tensile toughness is also known as tensile strength (TS), ultimate strength and Ultimate tensile strength (UTS).

The term "tensile elongation" as used herein means the stretching that a material undergoes as it is pulled in tension. It is a measure of both elastic deformation and plastic deformation, and is commonly expressed as a percentage. It is used in conjunction with stress and strain values to help determine the mechanical properties of a material when performing a tensile test. Tensile toughness is also known as "fracture strain" and "tensile elongation at break".

The term "sintering" as used herein means the process of compacting and forming a solid mass of material by heat or pressure without melting it to the point of liquefaction.

The term "field assisted sintering", "field assisted sintering technique/technology", or "FAST" as used herein means a low voltage, direct current (DC) pulsed current activated, pressure-assisted sintering, and synthesis technique. Field assisted sintering is also known as spark plasma sintering (SPS), pulsed electric current sintering (PECS) and plasma pressure compaction (P2C).

The term "hardness" as used herein is a measure of the resistance to localized plastic deformation induced by either mechanical indentation or abrasion. Hardness is commonly measured by the Vickers hardness test and hardness mentioned by that test is commonly referred to as Vickers hardness.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

### BRIEF DESCRIPTION OF THE DRAWINGS

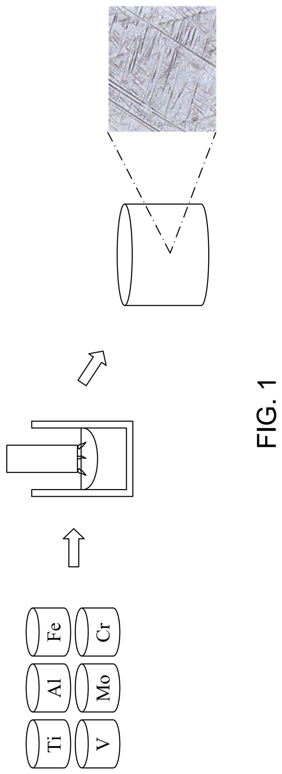

Embodiments will now be described by way of example only, with reference to the
Figures, in which: **FIG. 1** is a schematic representation of the method of preparing a titanium alloy of the present disclosure.

### DETAILED DESCRIPTION

Aspects and embodiments of the present disclosure will now be discussed with reference to the accompanying figures. Further aspects and embodiments will be apparent to those skilled in the art.

The present disclosure provides a titanium alloy, a titanium alloy component, a method of preparing a titanium alloy, and a methods of preparing a titanium alloy component.

### The new titanium alloy

The titanium alloy of the present disclosure comprises the following composition: Al 3.00 to 5.50 wt.%; V 3.50 to 5.00 wt.%; Mo 1.50 to 3.00 wt.%; Cr 1.00 to 2.50 wt.%; Fe 0.00 to 0.50 wt.%; Sn 0.00 to 1.25 wt.%; Zr 0.00 to 2.00 wt.%; C 0.01 wt.% to 0.50 wt.%; Si 0.00 wt.% to 0.50 wt.%; N up to 500 ppm; O up to 2500 ppm and H up to 150 ppm; the balance being Ti and incidental elements and unavoidable impurities.

Other alloy elements which may be present in the aforementioned titanium alloy as impurities, for example, selected from any of the following:
S, P, Mg, Cu, Sn, Nb, Hf, Bi, Ru, Pd, Y, Co, Ta, Ni, B, Mn, W and/or Zn should each have a wt.% of less than 0.1, with the sum of all impurities being less than 0.4 wt.%.

The titanium alloy of the present disclosure, which is in solid form, shows improved fatigue performance, strength and ductility that is suitable for its use in the manufacture titanium alloy articles, for example of titanium alloy gas turbine engine components.

The improved performance can enable gas turbine engine components formed from same to enable the gas turbine engine to be operated with longer effective life, greater efficiency, and improved specific fuel consumption (SFC). It may even allow gas turbine engine components to be re-designed in a manner that includes less material, thereby reducing weight to improve specific fuel consumption (SFC) and save resources.

The favourable strength and ductility properties of the titanium alloy of the present disclosure may be attributed to its bimodal microstructure and the presence of fine-scale alpha laths, despite relatively slow-cooling.

No evidence of the formation of omega phase has been observed i.e. no evidence of streaked spots indicating the presence of such a phase has been observed.

More particularly, the titanium alloy of the present disclosure has useful tensile toughness and/or tensile elongation properties which include improvements over existing titanium alloys in the as-produced condition.

Aluminium is understood to stabilise the alpha phase of titanium alloys, enhancing tensile strength, and reducing density for a better strength-to-weight ratio, making them ideal for aerospace applications.

Vanadium is understood to provide increased strength, particularly fracture toughness, and enhance ductility.

Molybdenum is understood to provide increased strength, particularly at elevated temperatures, and enhance creep resistance. It can also improve hot working processing flexibility, perhaps by increasing the temperature width of the alpha + beta phase field.

Chromium is understood to provide increased strength to the titanium alloy.

Iron is understood to provide increased strength, particularly at elevated temperatures, and can improve hot working processing flexibility, perhaps by increasing the temperature width of the alpha + beta phase field.

Tin is understood to provide increased strength to the alloy, particularly at elevated temperatures. It may however decrease plastic elongation and ballistic impact resistance so in some embodiments the content of tin is minimised or the titanium alloy may be substantially free from Sn.

Zirconium is understood to provide increased strength to the titanium alloy, particularly at elevated temperatures. It may however decrease plastic elongation and ballistic impact resistance, particularly in titanium alloys that contain silicon, so in some embodiments the content of zirconium is minimised or the titanium alloy may be substantially free from silicon.

Carbon is typically present in titanium alloys due to low levels in the input materials used in formulation and can be intentionally added to meet a desired chemistry. A certain amount of C above 0.01 wt% is beneficial to 0.2 % yield strength and ultimate tensile strength without degrading plastic elongation, reduction in area and/or ballistic impact resistance.

Silicon is understood to provide increased strength but at high levels, e.g. above 0.30 wt.% can lead to silicon segregation problems.

Nitrogen (N) is typically present in the titanium alloys due to inevitable pick-up during vacuum melting step(s) in the production of the titanium alloy. N will increases the strength and hardness of a titanium alloy.

Oxygen is typically naturally present in titanium alloys and can be added to provide a desired chemistry.

Hydrogen is typically present in titanium alloys due to low levels in the input materials used in formulation and can be intentionally added to meet a desired chemistry

In some embodiments the titanium alloy of the present disclosure comprises the following composition: Al 4.00 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N up to 500 ppm; O up to 2500 ppm and H up to 150 ppm; the balance being Ti and incidental elements and unavoidable impurities.

In some embodiments the titanium alloy of the present disclosure comprises the following composition: Al 4.00 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.50 wt.% to 0.10 wt.%; N 1 to 500 ppm; O up to 2500 ppm; and H up to 150 ppm; the balance being Ti and incidental elements and unavoidable impurities.

In some embodiments the titanium alloy of the present disclosure comprises the following composition: Al 4.00 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm; and H 1 to 150 ppm; the balance being Ti and incidental elements and unavoidable impurities.

In some embodiments the titanium alloy of the present disclosure comprises the following composition: Al 4.05 to 5.00 wt.%; V 3.70 to 4.50 wt.%; Mo 1.90 to 2.45 wt.%; Cr 1.00 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm; and H 1 to 150 ppm; the balance being Ti and incidental elements and unavoidable impurities.

In some embodiments, the titanium alloy of the present disclosure comprises: Al 4.20 to 4.50 wt.%; V 3.70 to 4.30 wt.%; Mo 1.90 to 2.45 wt.%; Cr 0.70 to 2.00 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm and H 1 to 150 ppm; the balance being Ti and incidental elements and unavoidable impurities.

In some embodiments, the titanium alloy of the present disclosure comprises: Al 4.20 to 4.50 wt.%; V 3.70 to 4.25 wt.%; Mo 1.90 to 2.45 wt.%; Cr 0.70 to 1.90 wt.%; Fe 0.00 to 0.50 wt.%; Sn 0.00 to 1.00 wt.%; Zr 0.00 to 1.50 wt.%; C 0.01 wt.% to 0.50 wt.%; Si 0.00 wt.% to 0.50 wt.%; N 1 to 500 ppm; O up to 2500 ppm and H 1 to 150 ppm; the balance being Ti and incidental elements and unavoidable impurities.

Other alloy elements which may be present in the aforementioned titanium alloy as impurities are, for example, selected from any of the following: S, P, Mg, Cu, Nb, Hf, Bi, Ru, Pd, Y, Co, Ta, Ni, B, Mn, W and/or Zn.

In some embodiments, the titanium alloy comprises no more than 0.2 wt.%, 0.1 wt. %, or 0.05 wt.% of any one of S, P, Mg, Cu, Nb, Hf, Bi, Ru, Pd, Y, Co, Ta, Ni, B, Mn, W and Zn.

In some embodiments, the sum of all impurities in the titanium alloy is no more than 0.5 wt. %, 0.4 wt. %, 0.3 wt. %, 0.2 wt. %, or 0.1 wt. %.

The titanium alloy of the present disclosure with the aforementioned compositional range is in the form of a solid. However, it may be converted to a physical form that is suitable for use in a desired manufacturing process using any suitable art-known method for that.

In some embodiments the titanium alloy is in a physical form that is suitable for use in a powder-based manufacturing process, for example field assisted sintering technology (FAST), hot isostatic pressing (HIP) or metal injection moulding (MIM).

In some embodiments the titanium alloy is in a physical form that is suitable for use in an additive manufacturing process, for example the titanium alloy is in the form of a wire, a rod or a powder.

In some embodiments the titanium alloy is in a physical form that is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD), ion fusion formation (IFF), wire arc additive manufacturing (WAAM), shaped metal deposition (SMD), Laser Blown Powder Directed Energy Deposition (LBP-DED), flash sintering, cold spray and field assisted sintering technology (FAST).

The article may be forge processed and/or machined to a desired shape and geometry, e.g. using methods and equipment well known in the art.

### Articles made from the new titanium alloy

The titanium alloy article of the second aspect of the present disclosure comprises or in some instance consists of the titanium alloy of the first aspect of the present disclosure.

In some embodiments, the titanium alloy article is a gas turbine engine component. The gas turbine engine component may, for example, a compressor disk, a bladed disk, a casing, a fan blade or a stator.

In some embodiments, the titanium alloy article is a tool or it is piece of sporting equipment e.g. a golf club.

### Preparation of the new titanium alloy

The titanium alloy of the present disclosure can be prepared by casting same from the constituent elements. Such a method is schematically represented in **FIG. 1** of the drawings.

The titanium alloy powder blend is sintered to form the titanium alloy of the present disclosure. The sintering can be performed using any suitable equipment and technique for the purpose.

In some embodiments the titanium alloy the powder mix is sintered using a field assisted sintering technique or "FAST". Such a sintering method involves low voltage, direct current (DC) pulsed current activated, pressure-assisted sintering. Field assisted sintering is also known as spark plasma sintering (SPS), pulsed electric current sintering (PECS) and plasma pressure compaction (P2C). The technique is described in N. S. Weston, F. Derguti, A. Tudball, and M. Jackson, "Spark plasma sintering of commercial and development titanium alloy powders," J. Mater. Sci., vol. 50, no. 14, pp. 4860-4878, 2015.

While not wanting to be bound by theory, the effect of the electric current during field assisted sintering is thought to enhance diffusion, which may be at least in part responsible for the favourable properties that have been observed when using field assisted sintering.

In some embodiments the titanium alloy powder mix is field assisted sintered using, a dwell temperature of 850 to 1200 °C, a dwell time of 0 to 90 minutes, a pressure range of between 20 and 50 MPa, a heating rate range of 25 to 200 °C/min, a cooling rate range of 10 to 200 °C/min, a pulse pattern of 15 ms on and 5 ms off.

Other sintering methods include powder sintering e.g. hot isostatic pressure (HIP) and additive manufacturing (AM).

In some embodiments the titanium alloy may be produced in solid form as a cast alloy which may be formed from the individual elements or from any combination of pre-alloyed mixes of the elements. Different casting methods for producing the alloy , include, but are not limited to: Vacuum Arc Melting (VAM), Vacuum Arc Remelting (VAR), Cold Hearth Melting (CHM), Wrought Processing (WP) and Vacuum Induction Melting (VIM)

In some embodiments the titanium alloy may be produced as a powder which is atomised with the chemistry matching the ranges described in the present disclosure. The feedstock for the atomisation processes (including Electrode Induction Gas Atomisation (EIGA) or Plasma Rotating Electrode Processing (PREP)) uses bars or ingots of the alloy that have been produced using the methods described above or wires which have been drawn down to specific diameters from these bars or ingots (e.g. Plasma Atomisation (PA)). Some atomisation processes may also produce the powder directly from the elements or combinations of the elements such as is the case in gas atomisation (GA) processes.

### Preparation of gas turbine engine components from the new titanium alloy

The titanium alloy of the present disclosure is useful to manufacture titanium alloy articles, especially titanium alloy gas turbine engine components, including compressor discs, blade disks, casings, fan blades or stators.

Titanium alloy articles of the second aspect, e.g. titanium alloy gas turbine engine components, can be prepared using a variety of manufacturing methods that are known in the art.

In some embodiments the titanium alloy is in a physical form that is suitable for use in a powder-based manufacturing process, for example field assisted sintering technology (FAST), hot isostatic pressing (HIP) or metal injection moulding (MIM).

In a powder-based manufacturing process a metal powder, which may be a shaped powder pre-form, is subjected to heat and pressure to melt or sinter the metal powder particles together to form the desired article, component or structure. For further information please refer to "Powder Metallurgy Technology" by G S Upadhyaya, Cambridge Int Science Publishing (1997); also "Powder Metallurgy", Chapter 4 in "A Textbook of Manufacturing Technology: Manufacturing Processes" by R K Rajput (2007); also "Powder Metallurgy; Science, Technology and Applications", P C Angelo and R Subramanian (2008), pub. PHI Learning Pvt. Ltd.; also W B James, "Powder Metallurgy Methods and Applications", in ASM Handbook (Ed. P Samal and J Newkirk), volume 7 (2015) pages 9 to 19, the contents of which are incorporated herein by reference.

In some embodiments the titanium alloy is in a physical form that is suitable for use in an additive manufacturing process, for example the titanium alloy is in the form of a wire, a rod or a powder.

In an additive manufacturing process for creating a metal article, component or structure, metal powder or a metal body such as, for example, a rod or wire is fed into a melt pool that is heated, typically by a laser, electron beam or plasma arc. The machine head moves the heat source and metal feed to deposit layers of metal in the desired shape, supported on a substrate or bed, which is suitably metallic. The process typically occurs in a vacuum or inert atmosphere to restrict oxidation of the metals. For further information please refer to "Additive Manufacturing Technologies" by Gibson, Rosen and Stucker (2015), published by Springer, the contents of which are incorporated herein by reference. For example, a review of directed energy deposition (DED) processes is contained in Gibson et al., "Directed Energy Deposition Processes", on pages 245-268 of the said "Additive Manufacturing Technologies"; the contents of that chapter are also specifically incorporated herein by reference. Also, C K Chua et al., "3D Printing and Additive Manufacturing" 4th Edition (2014), published by World Scientific Publishing Co.

A powder composition of, or comprising, the titanium alloy of the present disclosure, suitable for use in an additive manufacturing process or a powder-based manufacturing process for the production of gas turbine engine components, typically has a powder particle size (diameter) distribution that lies between about 10 and about 250 µm, and the particles are typically of substantially spherical shape.

The powder particle size distribution (PSD) required will vary dependent on the process employed. For example, with field assisted sintering (FAST) any PSD can be used, including, e.g. PSD ranges from < 45 microns to > 250 microns in several increments. It has been found that with a smaller PSD the FAST conditions (time and temperature) required for achieving a homogeneous mix can be reduced due to the smaller diffusion distances required, and vice-versa. However, when using an additive manufacturing (AM) process, stricter PSD limits tend to apply, depending on the specific process, a PSD in the region of 10 to 60 microns may be used.

In some embodiments the titanium alloy is in a physical form that is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD) ion fusion formation (IFF), wire arc additive manufacturing (WAAM), shaped metal deposition (SMD), Laser Blown Powder Directed Energy Deposition (LBP-DED), flash sintering, cold spray and field assisted sintering technology (FAST).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

### EXAMPLES

The titanium alloy of the present disclosure and its preparation and testing is described in the following illustrative examples with reference to the certain of the accompanying drawings.

### Example 1

### Preparation of titanium alloy powders S23(I)

Titanium alloy powders are prepared by combining various elements in amounts that are listed in Table 1 below.

The quantities of Ti, Al, V, Mo, Cr and Fe are measured via Inductively Coupled Plasma - Optical Emission Spectroscopy (ICP-OES), the quantities of C are measured via combustion analysis and the quantities of N, O and H are measured via Inert Gas Fusion.

**TABLE 1**

| **Composition of titanium alloy powder S23(I)** | | | |
|---|---|---|---|
| **Element** | **S23(Ia)** | **S23(Ib)** | **S23(Ic)** |
| Ti (wt.%) | 92.45 | 86.79 | 81.15 |
| Al (wt.%) | 2.00 | 4.25 | 6.50 |
| V (wt.%) | 3.50 | 4.50 | 5.50 |
| Mo (wt.%) | 1.30 | 2.45 | 3.60 |
| Cr (wt.%) | 0.75 | 1.63 | 2.50 |
| Fe (wt.%) | 0.00 | 0.25 | 0.50 |
| O (wt.%) | 0.00 | 0.13 | 0.25 |
| C (ppm) | 250 | 250 | 250 |
| N (ppm) | 250 | 250 | 250 |
| H (ppm) | 50 | 50 | 50 |

The measured values for carbon, hydrogen, oxygen and nitrogen are all within acceptable limits.

The suitable wt.% of each element to be used using alternative ratios can be determined using ThermoCalc^{™} thermodynamic modelling software.

### Example 2

### Preparation of the titanium alloys S23(I)

A titanium alloy of the present disclosure was prepared as follows:
Titanium alloy powders are prepared from each of the titanium alloy powders of Example 1, added to a powder mixing device and mixed to form a homogenous titanium alloy powder.

In each case the powder is transferred to a cylindrical graphite mould for processing with field assisted sintering.

Each is sintered using a field assisted sintering technique in accordance with the parameters set out in Table 2 below.

**TABLE 2**

| Field assisted sintering conditions | |
|---|---|
| Dwell Time | 60 minutes |
| Dwell Temperature | 1200 °C |
| Pressure | 35 MPa |
| Pulse Pattern | 15 on, 5 off ms |
| Heating Rate | 50 °C/min |
| Cooling Rate | 10 °C/min |
| Mould Diameter | 250 mm |

In each case the resulting product was a solid titanium billet.

### Example 3

### Preparation of titanium alloy powders S23(II)

Titanium alloy powders are prepared by combining various elements in amounts that are listed in Table 3 below.

The quantities of Ti, Al, V, Mo, Cr and Fe are measured via Inductively Coupled Plasma - Optical Emission Spectroscopy (ICP-OES), the quantities of C are measured via combustion analysis and the quantities of N, O and H are measured via Inert Gas Fusion.

**TABLE 3**

| **Composition of titanium alloy powder S23(II)** | | | |
|---|---|---|---|
| **Element** | **S23(IIa)** | **S23(IIb)** | **S23(IIc)** |
| Ti (wt.%) | 92.95 | 86.04 | 79.15 |
| Al (wt.%) | 2.00 | 4.25 | 6.50 |
| V (wt.%) | 3.00 | 4.25 | 5.50 |
| Mo (wt.%) | 1.30 | 2.45 | 3.60 |
| Cr (wt.%) | 0.75 | 1.88 | 3.00 |
| Sn (wt.%) | 0.00 | 0.75 | 1.50 |
| Fe (wt.%) | 0.00 | 0.25 | 0.50 |
| O (wt.%) | 0.00 | 0.13 | 0.25 |
| C (ppm) | 250 | 250 | 250 |
| N (ppm) | 250 | 250 | 250 |
| H (ppm) | 50 | 50 | 50 |

The measured values for carbon, hydrogen, oxygen and nitrogen are all within acceptable limits.

The suitable wt.% of each element to be used using alternative ratios can be determined using ThermoCalc^{™} thermodynamic modelling software.

### Example 4

### Preparation of the titanium alloys S23(II)

A titanium alloy of the present disclosure was prepared as follows:
Titanium alloy powders are prepared from each of the titanium alloy powders of Example 3, added to a powder mixing device and mixed to form a homogenous titanium alloy powder.

In each case the powder is transferred to a cylindrical graphite mould for processing with field assisted sintering.

Each is sintered using a field assisted sintering technique in accordance with the parameters set out in Table 4 below.

**TABLE 4**

| Field assisted sintering conditions | |
|---|---|
| Dwell Time | 60 minutes |
| Dwell Temperature | 1200 °C |
| Pressure | 35 MPa |
| Pulse Pattern | 15 on, 5 off ms |
| Heating Rate | 50 °C/min |
| Cooling Rate | 10 °C/min |
| Mould Diameter | 250 mm |

In each case the resulting product was a solid titanium billet.

### Example 5

### Preparation of titanium alloy powders S23(III)

Titanium alloy powders are prepared by combining various elements in amounts that are listed in Table 5 below.

The quantities of Ti, Al, V, Mo, Cr and Fe are measured via Inductively Coupled Plasma - Optical Emission Spectroscopy (ICP-OES), the quantities of C and S are measured via combustion analysis and the quantities of N, O and H are measured via Inert Gas Fusion.

**TABLE 5**

| **Composition of titanium alloy powder S23(III)** | | | |
|---|---|---|---|
| **Element** | **S23(III)** | **S23(IIIb)** | **S23(IIIc)** |
| Ti (wt.%) | 86.70 | 86.57 | 86.45 |
| Al (wt.%) | 4.30 | 4.30 | 4.30 |
| V (wt.%) | 3.70 | 3.70 | 3.70 |
| Cr (wt.%) | 2.20 | 2.20 | 2.20 |
| Mo (wt.%) | 1.90 | 1.90 | 1.90 |
| Sn (wt.%) | 1.00 | 1.00 | 1.00 |
| Fe (wt.%) | 0.20 | 0.20 | 0.20 |
| O (wt.%) | 0.00 | 0.13 | 0.25 |
| C (ppm) | 250 | 250 | 250 |
| N (ppm) | 250 | 250 | 250 |
| H (ppm) | 50 | 50 | 50 |

The measured values for carbon, hydrogen, oxygen and nitrogen are all within acceptable limits.

The suitable wt.% of each element to be used using alternative ratios can be determined using ThermoCalc^{™} thermodynamic modelling software.

### Example 6

### Preparation of the titanium alloys S23(III)

A titanium alloy of the present disclosure was prepared as follows:
Titanium alloy powders are prepared from each of the titanium alloy powders of Example 5, added to a powder mixing device and mixed to form a homogenous titanium alloy powder.

In each case the powder is transferred to a cylindrical graphite mould for processing with field assisted sintering.

Each is sintered using a field assisted sintering technique in accordance with the parameters set out in Table 6 below.

**TABLE 6**

| Field assisted sintering conditions | |
|---|---|
| Dwell Time | 60 minutes |
| Dwell Temperature | 1200 °C |
| Pressure | 35 MPa |
| Pulse Pattern | 15 on, 5 off ms |
| Heating Rate | 50 °C/min |
| Cooling Rate | 10 °C/min |
| Mould Diameter | 250 mm |

In each case the resulting product was a solid titanium billet.

### Example 7

### Preparation of titanium alloy powders S23(IV)

Titanium alloy powders are prepared by combining various elements in amounts that are listed in Table 7 below.

The quantities of Ti, Al, V, Mo, Cr and Fe are measured via Inductively Coupled Plasma - Optical Emission Spectroscopy (ICP-OES), the quantities of C are measured via combustion analysis and the quantities of N, O and H are measured via Inert Gas Fusion.

**TABLE 7**

| **Composition of titanium alloy powder S23(IV)** | | | |
|---|---|---|---|
| **Element** | **S23(IVa)** | **S23(IVb)** | **S23(IVc)** |
| Ti (wt.%) | 92.95 | 84.54 | 76.15 |
| Al (wt.%) | 2.00 | 4.25 | 6.50 |
| V (wt.%) | 3.00 | 4.25 | 5.50 |
| Mo (wt.%) | 1.30 | 2.45 | 3.60 |
| Cr (wt.%) | 0.75 | 1.88 | 3.00 |
| Fe (wt.%) | 0.00 | 0.25 | 0.50 |
| O (wt.%) | 0.00 | 0.13 | 0.25 |
| Sn (wt.%) | 0.00 | 0.75 | 1.50 |

| **Element** | **S23(IVa)** | **S23(IVb)** | **S23(IVc)** |
|---|---|---|---|
| Zr (wt.%) | 0.00 | 1.50 | 3.00 |
| C (ppm) | 250 | 250 | 250 |
| N (ppm) | 250 | 250 | 250 |
| H (ppm) | 50 | 50 | 50 |

The measured values for carbon, hydrogen, oxygen and nitrogen are all within acceptable limits.

The suitable wt.% of each element to be used using alternative ratios can be determined using ThermoCalc^{™} thermodynamic modelling software.

### Example 8

### Preparation of the titanium alloys S23(IV)

A titanium alloy of the present disclosure was prepared as follows:
Titanium alloy powders are prepared from each of the titanium alloy powders of Example 7, added to a powder mixing device and mixed to form a homogenous titanium alloy powder.

In each case the powder is transferred to a cylindrical graphite mould for processing with field assisted sintering.

Each is sintered using a field assisted sintering technique in accordance with the parameters set out in Table 8 below.

**TABLE 4**

| Field assisted sintering conditions | |
|---|---|
| Dwell Time | 60 minutes |
| Dwell Temperature | 1200 °C |
| Pressure | 35 MPa |
| Pulse Pattern | 15 on, 5 off ms |
| Heating Rate | 50 °C/min |
| Cooling Rate | 10 °C/min |
| Mould Diameter | 250 mm |

In each case the resulting product was a solid titanium billet.

### Example 9

### Manufacture of a titanium alloy article e.g. a gas turbine engine component

Compressor disks for a gas turbine engine are prepared by casting the compressor disks from the titanium alloy prepared in each of Examples 2, 4, 6 and 8.

### Example 10

### Manufacture of a titanium alloy article e.g. a gas turbine engine component

Bladed disks for a high pressure turbine of a gas turbine engine are prepared by additive layer manufacturing using the titanium alloy prepared in each of Examples 2, 4, 6 and 8.

## Claims

1. A titanium alloy comprising the following composition:
| | |
|---|---|
| Al | 3.00 to 5.50 wt.%; |
| V | 3.50 to 5.00 wt.%; |
| Mo | 1.50 to 3.00 wt.%; |
| Cr | 1.00 to 2.50 wt.%; |
| Fe | 0.00 to 0.50 wt.%; |
| Sn | 0.00 to 1.25 wt.%; |
| Zr | 0.00 to 2.00 wt.%; |
| C | 0.01 to 0.50 wt.%; |
| Si | 0.00 wt.% to 0.50 wt.%; |
| N | up to 500 ppm; |
| O | up to 2500 ppm and |
| H | up to 150 ppm; |
the balance being Ti and incidental elements and unavoidable impurities.

2. The titanium alloy of claim 1, comprising the following composition:
| | |
|---|---|
| Al | 4.00 to 5.00 wt.%; |
| V | 3.70 to 4.50 wt.%; |
| Mo | 1.90 to 2.45 wt.%; |
| Cr | 1.00 to 2.00 wt.%; |
| Fe | 0.00 to 0.50 wt.%; |
| Sn | 0.00 to 1.00 wt.%; |
| Zr | 0.00 to 1.50 wt.%; |
| C | 0.01 to 0.50 wt.%; |
| Si | 0.00 wt.% to 0.50 wt.%; |
| N | up to 500 ppm; |
| O | up to 2500 ppm and |
| H | up to 150 ppm; |
the balance being Ti and incidental elements and unavoidable impurities.

3. The titanium alloy of claim 1 or 2, comprising the following composition:
| | |
|---|---|
| Al | 4.00 to 5.00 wt.%; |
| V | 3.70 to 4.50 wt.%; |
| Mo | 1.90 to 2.45 wt.%; |
| Cr | 1.00 to 2.00 wt.%; |
| Fe | 0.00 to 0.50 wt.%; |
| Sn | 0.00 to 1.00 wt.%; |
| Zr | 0.00 to 1.50 wt.%; |
| C | 0.01 to 0.50 wt.%; |
| Si | 0.00 wt.% to 0.50 wt.%; |
| N | 1 to 500 ppm; |
| O | up to 2500 ppm; and |
| H | up to 150 ppm; |
the balance being Ti and incidental elements and unavoidable impurities.

4. The titanium alloy of any preceding claim, comprising the following composition:
| | |
|---|---|
| Al | 4.05 to 5.00 wt.%; |
| V | 3.70 to 4.50 wt.%; |
| Mo | 1.90 to 2.45 wt.%; |
| Cr | 1.00 to 2.00 wt.%; |
| Fe | 0.00 to 0.50 wt.%; |
| Sn | 0.00 to 1.00 wt.%; |
| Zr | 0.00 to 1.50 wt.%; |
| C | 0.01 to 0.50 wt.%; |
| Si | 0.00 wt.% to 0.50 wt.%; |
| N | 1 to 500 ppm; |
| O | up to 2500 ppm; and |
| H | 1 to 150 ppm; |
the balance being Ti and incidental elements and unavoidable impurities.

5. The titanium alloy of any preceding claim, wherein the titanium alloy is in a physical form that is suitable for use in a powder-based manufacturing process.

6. The titanium alloy of claim 5, wherein the titanium alloy is in the form of a powder suitable for use in hot isostatic pressing (HIP) or metal injection moulding (MIM).

7. The titanium alloy of any preceding claim, wherein the titanium alloy is in a physical form that is suitable for use in an additive manufacturing process.

8. The titanium alloy of claim 7, wherein the titanium alloy is in the form of a wire, a rod or a powder.

9. A titanium alloy article that comprises the titanium alloy of any preceding claim.

10. The titanium alloy article of claim 9 that is a gas turbine component.

11. The titanium alloy article of claim 10, wherein the gas turbine component is a compressor disk, a bladed disk, or a casing.

12. A method of preparing a titanium alloy of any one of claims 1 to 8, the method comprising:
combining the elements in the amounts of any one of claims 1 to 4; and
casting the combination to form a titanium alloy of any one of claims 1 to 4.

13. A method of manufacturing a titanium alloy article of any one of claims 9 to 11, the method comprising casting the article from a titanium alloy in solid form of any one of claims 1 to 4, or applying energy to a titanium alloy of any one of claims 1 to 4 in powder form in an additive manufacturing process.

14. The method of claim 13, wherein the article is forge processed and/or machined to a desired shape and geometry.
